# EUROPEAN PATENT APPLICATION

(11) **EP 1 884 742 A2**
(43) Date of publication of application: **06.02.2008**
(21) Application number: 07013765.8
(22) Date of filing: 13.07.2007
(51) Int. Cl.: G01C 21/32, G01C 21/34, G09B 29/10

(54) **Route search system, road data generation apparatus, route search data, server program, and route search method**

(30) Priority: 02.08.2006 JP 2006211447
(71) Applicant: Pioneer Corporation, Meguro-ku, Tokyo (JP); Increment P Corporation, Tokyo-to (JP)
(72) Inventor: Koizumi, Isao, Tokyo (JP)
(74) Representative: Tappe, Hartmut

(57) **Abstract**

A route search system is provided that is capable of accurately updating necessary road information and searching for a route while preventing the range of the area for which road information is to be updated from becoming infinitely large. A server apparatus that provides the most recent road data divides the area where roads lie into mesh M divisions, and sets representative points X for each of the mesh M divisions that represent that area. Routes for traveling between all of representative points X are comprehensively searched beforehand and the results stored in the server apparatus. When the results of a route search by a car navigation system differs from a route between representative points that is stored in the server apparatus, road data that indicates the route between representative points is used to update the road data that is stored in the car navigation system.

## Description

### BACKGROUND OF THE INVENTION

### 1.Field of the Invention

This invention relates to a route search system, road data generation apparatus, server apparatus, terminal apparatus, route search data, server program and route search method, and more particularly to a route search system, road data generation apparatus, server apparatus, terminal apparatus, route search data, server program and route search method that use the latest road information that is stored in a server apparatus to update road information on a terminal apparatus and perform a route search.

### 2.Description of a Related Art

Recently, route search systems that comprise a server apparatus that updates and stores the latest road information for roads through all of Japan, and a terminal apparatus that connects to that server apparatus by way of a network or the like, and wherein the terminal apparatus connects to the server apparatus to search for roads as a route suitable for the travel of the terminal apparatus are widely popular. As concrete examples of such a terminal apparatus are a so-called car navigation apparatus, or a navigation apparatus that is attached to a mobile telephone or mobile information terminal and that functions independently.

Here, in a prior route search system, it is desired that when searching for a travel route for the terminal apparatus, the terminal update the road information stored by the terminal apparatus by acquiring the latest road information and related map information stored on a server apparatus, then use that updated road information to execute a search.

When doing this, as a technique that is used for updating the road information on the terminal apparatus using the road information stored on the server apparatus, is a method such as that disclosed in Japanese patent application 2006-65246 (FIG. 2) in which a version of road information that is stored on the server apparatus is compared with a version of road information that is stored by the terminal apparatus, and only when the information of the version stored by the server apparatus is more update, is that new version of road information used to update the road information stored by the terminal apparatus.

On the other hand, when determining the area on a map for which to update the road information when performing that update, taking into consideration the amount of communication required between the server apparatus and the terminal apparatus and the communication fees that are generated, it is desired that the update process be performed for only the necessary area using the least amount of communication as possible.

Therefore, conventionally, when determining the area for which update is to be performed when executing the update process, the update is performed for a range based on a governmental division such as a prefecture, city, town or the like, and road information corresponding to the governmental division that contains the road being searched is updated.

However, in the prior method of determining the update area described above, the area to be updated is set in units of governmental divisions, so as a result, in the case of a road that crosses over from a governmental division that is the target of the update to a governmental division that is not a target of the update, mismatching (lack of continuity of the road) may occur at the border line between the governmental divisions before and after the update.

Therefore, taking into consideration that there is a possibility that a route will be searched according to various different conditions in the route search process (in other words, a possibility that various roads corresponding to the conditions will be searched over a wide range), it is preferred that the aforementioned mismatching of roads does not occur. When the aforementioned mismatching of roads occurs between adjacent governmental divisions as a result of updating road information in one of the governmental divisions, it becomes necessary to also update the road information in that adjacent governmental division, and as this occurs repeatedly for each governmental division in a chain-like reaction, there is a problem in that as a result there is a possibility that the area to be updated will become infinitely large.

Moreover, when considering that it is necessary to perform the update with as little amount of communication as possible, this is a problem that absolutely must be solved.

Taking the aforementioned problems into consideration, it is the object of the present invention to provide a road search system, road search method, road search data, road data generation apparatus that creates that road search data, server apparatus, terminal apparatus, server program and terminal program that are capable of accurately updating road information that is necessary to be updated, and then using that information to perform a route search, while at the same time preventing the geographical range of the road information to be updated from becoming infinitely large.

### SUMMARY OF THE INVENTION

The above object of the present invention can be achieved by a route search system. The route search system that searches for a route of travel for a mobile terminal and that is included in a navigation system that is provided with a server apparatus that updates and stores the most recent server road information, and a mobile terminal that connects to the server apparatus, stores terminal road information and performs guidance processing, wherein the server apparatus is provided with a storage device for storing: representative point information that indicates representative points, which are representative points that represent areas where a road lies and that is divided beforehand and that are set beforehand for each area, and that corresponds to the most recent the server road information; and inter-representative point route information that indicates the roads that should be used when traveling between all the representative points together with the most recent server road information; the terminal apparatus is provided with: a representative point setting device for setting a starting representative point that corresponds to the starting point of the route over which the mobile terminal travels, and a destination representative point that corresponds to the destination point of that route; a terminal apparatus transmission device for transmitting route information to the server apparatus that corresponds to a route between representative points from the set starting representative point to the destination representative point; an update device for using received updated road information to update the saved terminal road information when updated road information is sent from the server apparatus to be used in updating the terminal road apparatus; and a search device for using the updated terminal road information to search for a route from the starting point to the destination point; and the server apparatus is further provided with: an extraction device for extracting the inter-representative point route information from the storage device that indicates the roads to be used when traveling from the representative starting point that corresponds to the sent route information to the representative destination point that corresponds to the sent route information; a judgment device for comparing the extracted inter-representative point route information with the sent route information, determining whether or not to update the terminal road information; and a server apparatus transmission device for transmitting the update information to the terminal apparatus that is to be used for update when it is determined that the terminal road information should be updated.

According to the present invention, inter-representative point route information for between all representative points is comprehensively stored in the server apparatus, so when determining a route required by the car navigation system, the load on the server apparatus while determining routes between representative points is greatly reduced. Furthermore, the car navigation system compares the version of both the set starting representative point and destination representative point with the version of the corresponding representative points in the server apparatus, and determines whether or not to update the road data, and since road data that is not related to the necessary route of travel of the car navigation system is not updated, the minimum necessary amount of road data to be updated for travel of the car navigation system is accurately set and road data is quickly updated. Therefore, it is possible to accurately determine the update range of road data necessary for the route search by the car navigation system, and to efficiently execute the update process.

In one aspect of the present invention can be achieved by the route search system of the present invention. The route search system is, wherein the judgment device compares the travel properties when the terminal apparatus travels over a route that corresponds to the extracted inter-representative point route information with the travel properties when the terminal apparatus travels over a route that corresponds to the sent route information, and when the travel properties when the terminal apparatus travels over a route that corresponds to the inter-representative point route information is more advantageous for the terminal apparatus than the travel properties when the terminal apparatus travels over a route that corresponds to the sent route information, determines that the terminal road information should be updated.

According to the present invention, when the travel properties when traveling over the route found by the server apparatus is more advantageous than the travel properties when the car navigation system travels over the route found beforehand by the car navigation system, it is determined that the road data should be updated, so the road data is efficiently updated only when it is necessary for the car navigation system that is going to travel.

In another aspect of the present invention can be achieved by the route search system of the present invention. The route search system is, wherein the judgment device determines that the terminal road information should be updated when the travel time required for the terminal to travel over a route that corresponds to the inter-representative point route information is shorter than the travel time required for the terminal apparatus to travel over a route that corresponds to the sent route information.

According to the present invention, when the travel time is used as the travel cost, and the travel time when the car navigation system travels a route by the server apparatus is shorter than the travel time when traveling the route found before by the car navigation system, it is determined that the road data should be updated, so based on this travel time, the road data is efficiently updated only when it is necessary for the car navigation system that is going to travel.

In further aspect of the present invention can be achieved by the route search system of the present invention. The route search system is, wherein the judgment device determines that the terminal road information should be updated when the travel distance required for the terminal to travel over a route that corresponds to the inter-representative point route information is shorter than the travel distance required for the terminal apparatus to travel over a route that corresponds to the sent route information.

According to the present invention, when the travel distance is used as the travel cost, and the travel distance when the car navigation system travels a route by the server apparatus is shorter than the travel distance when traveling the route found before by the car navigation system, it is determined that the road data should be updated, so based on this travel distance, the road data is efficiently updated only when it is necessary for the car navigation system that is going to travel.

In further aspect of the present invention can be achieved by the route search system of the present invention. The route search system is, wherein the judgment device determines that the terminal road information should be updated when the travel fee required for the terminal to travel over a route that corresponds to the inter-representative point route information is less than the travel fee required for the terminal apparatus to travel over a route that corresponds to the sent route information.

According to the present invention, when the travel fee is used as the travel cost, and the travel fee when the car navigation system travels a route by the server apparatus is less than the travel fee when traveling the route found before by the car navigation system, it is determined that the road data should be updated, so based on this travel fee, the road data is efficiently updated only when it is necessary for the car navigation system that is going to travel.

In further aspect of the present invention can be achieved by the route search system of the present invention. The route search system is, wherein the judgment device determines that the terminal road information should be updated when at least one of the representative points that represent the areas which include a route corresponding to the extracted inter-representative point route information is an updated point of at least one of the representative points that represent the area which includes a route that corresponds to the sent route information.

According to the present invention, when at least one of the representative points that represent the mesh that includes the route between the starting representative point and destination representative point is a point that has been updated for at least one of the representative points that represent the mesh in which the route that was searched by the car navigation system, the car navigation system determines that the road data should be updated, so only when there is an updated representative point is the minimum necessary amount of road data updated efficiently with the most resent update data.

In further aspect of the present invention can be achieved by the route search system of the present invention. The route search system is, wherein the areas are areas that are divided beforehand based on at least one of map scale, density of roads and amount of traffic that corresponds to the server road information.

According to the present invention, the mesh that is represented by the representative points is mesh that is divided beforehand based on at least one of the map scale, density of roads and amount of traffic corresponding to the road data in the server apparatus, so when performing the route guidance process, the mesh is divided based on the element that actually is a problem, so the route search is performed more accurately.

In further aspect of the present invention can be achieved by the route search system of the present invention. The route search system, wherein the representative point is an intersection in the area that is represented by that representative point where the amount of traffic is the greatest.

According to the present invention, when a representative point is an intersection in the corresponding mesh where the amount of traffic is the greatest, the representative point is set based on the amount of traffic that is the actual problem when performing the route guidance process, so the route search is performed more accurately.

In further aspect of the present invention can be achieved by the route search system of the present invention. The route search system of is, wherein the representative point is a point on a road that is the closest to the center of the area that is represented by that representative point.

According to the present invention, when a representative point is a point on a road that is the closest to the center of the corresponding mesh, the representative point is set as the center of the mesh that is the actual problem when performing the route guidance process, so the route search is performed more accurately.

In further aspect of the present invention can be achieved by the route search system of the present invention. The route search system is, wherein the representative point is an entrance to a freeway inside the area that is represented by that representative point.

According to the present invention, when a representative point is an entrance to a freeway inside the corresponding mesh, the representative point is set based on the freeway that will be the actual problem when performing the route guidance process when traveling a long distance.

In further aspect of the present invention can be achieved by a road data generation apparatus of the present invention. The road data generation apparatus that generates the server road information, the representative point information and the inter-representative point route information that is stored in the server apparatus that is included in the route search system of the present invention is provided with: a server road information update device for updating the server road information to the most recent information after each preset period; a representative point information update device for updating the representative point information that corresponds to the updated server road information; and an inter-representative point route information update device for updating the inter-representative point route information that corresponds to the updated server road information.

According to the present invention, the representative point information and inter-representative point route are updated in accordance to the update of the road data, so the latest information is always stored in the server apparatus and provided for a route search.

### BRIEF DESCRIPTION OF THE DRAWINGS

FIG. 1 is a block diagram showing the construction of a route search system of a first embodiment of the present invention.
FIGS. 2A and 2B are block diagrams showing the detailed construction of each of the apparatuses of the route search system of a first embodiment of the invention, where FIG. 2A is a block diagram showing the detailed construction of the server apparatus of the first embodiment of the invention, and FIG. 2B is a block diagram showing the detailed construction of a map data update apparatus of the first embodiment of the invention.
FIG. 3 is a drawing showing an example of the configuration of road data of a first embodiment of the invention.
FIG. 4 is a drawing showing an example of the state of representative points of a first embodiment of the invention.
FIG. 5 is a flowchart showing the process performed by the server apparatus for updating map data in a first embodiment of the invention.
FIG. 6 is a block diagram showing the construction of a car navigation system of a first embodiment of the invention.
FIG. 7 is a flowchart showing the route search process of a first embodiment of the invention.
FIG. 8 is a flowchart showing the route search process of a second embodiment of the invention.

### DESCRIPTION OF THE PREFERRED EMBODIMENTS

Next, the preferred embodiments of the present invention will be explained based on the supplied drawings. The embodiments explained below are embodiments in which the invention is applied to a route search system that comprises: a server apparatus that updates and stores map data that contains road data to be used for a route search so that a state is always maintained with the latest information, and a car navigation system that uses the most recent road data that is stored on the server apparatus to update its own stored road data and to perform a route search.

### (1) Embodiment 1

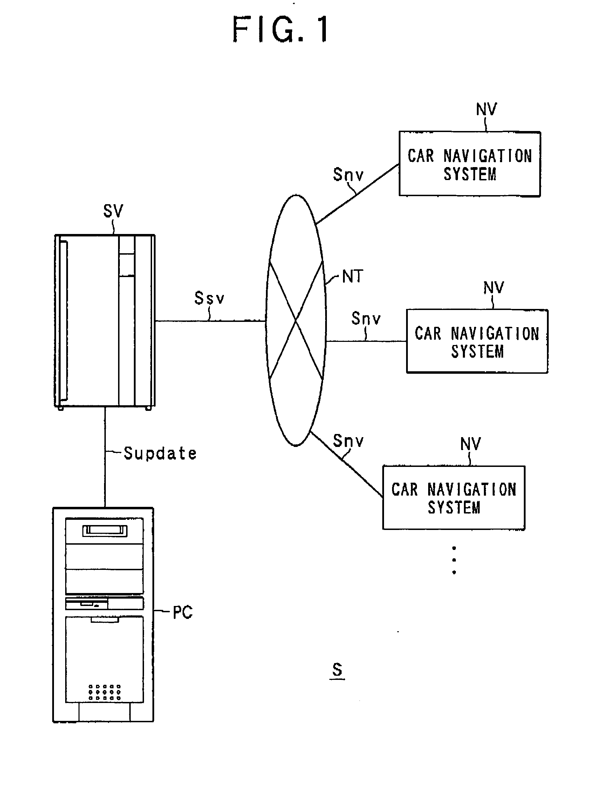

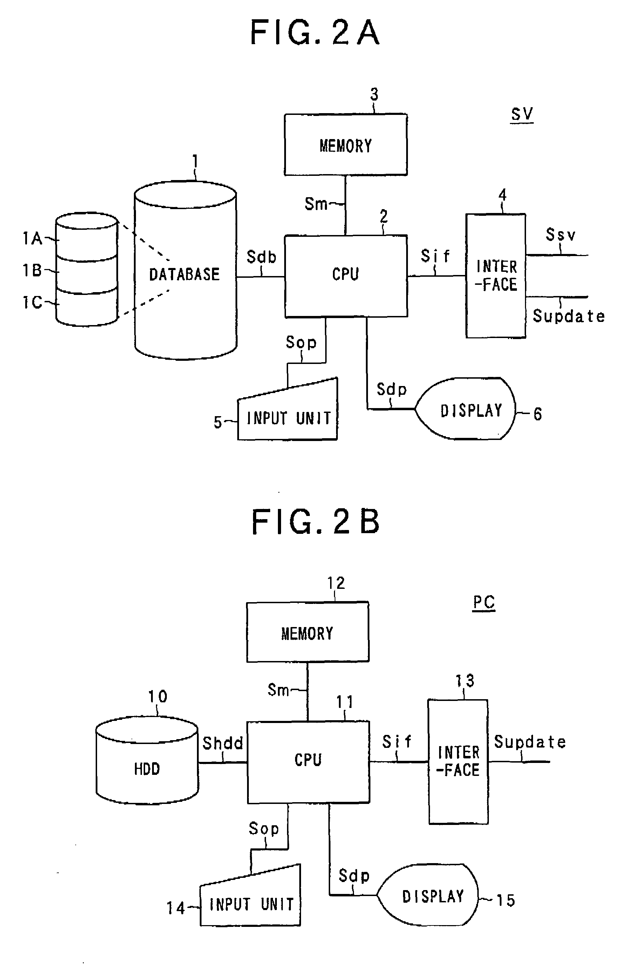

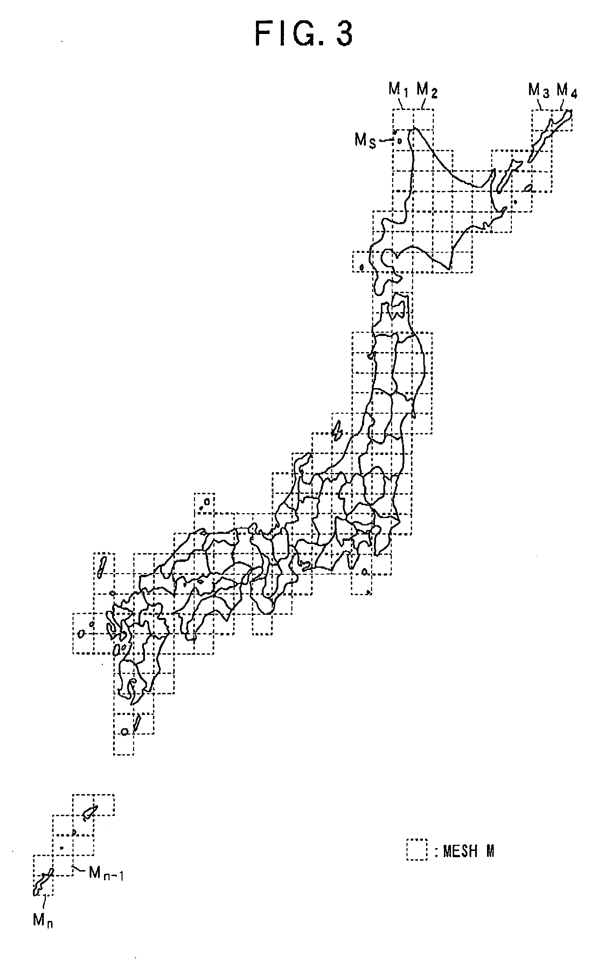

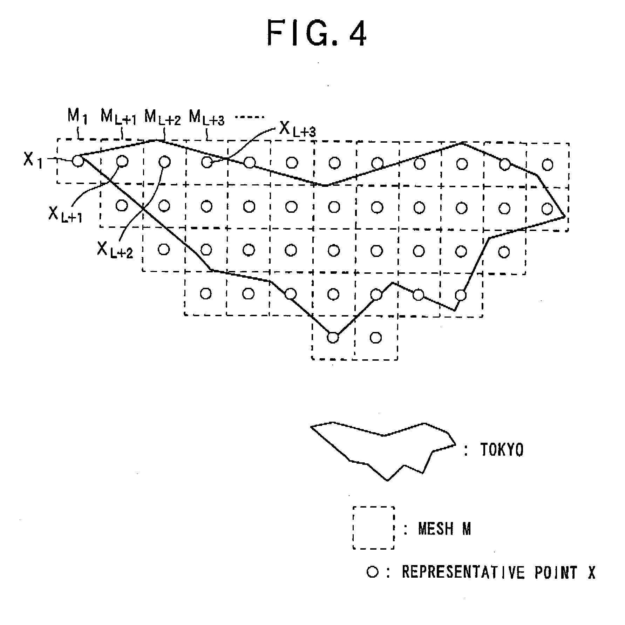

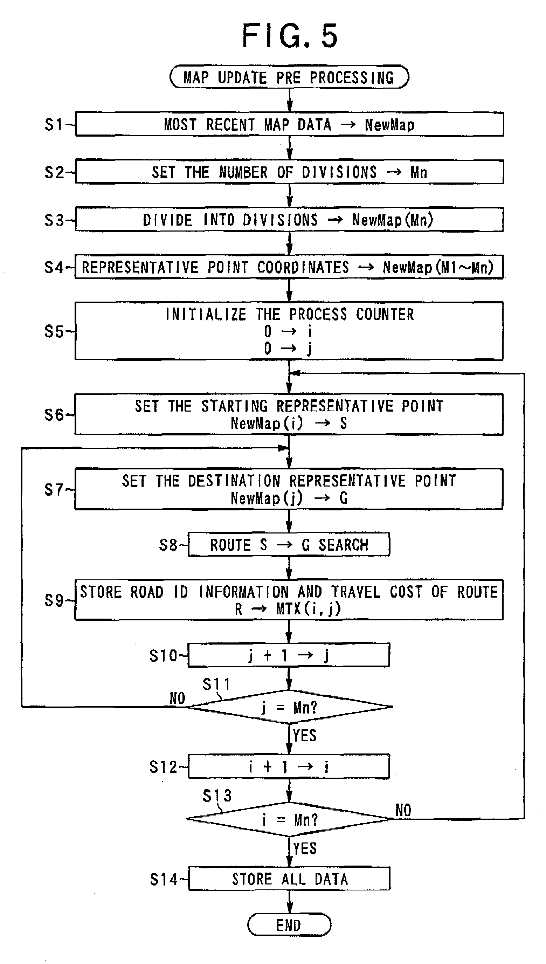

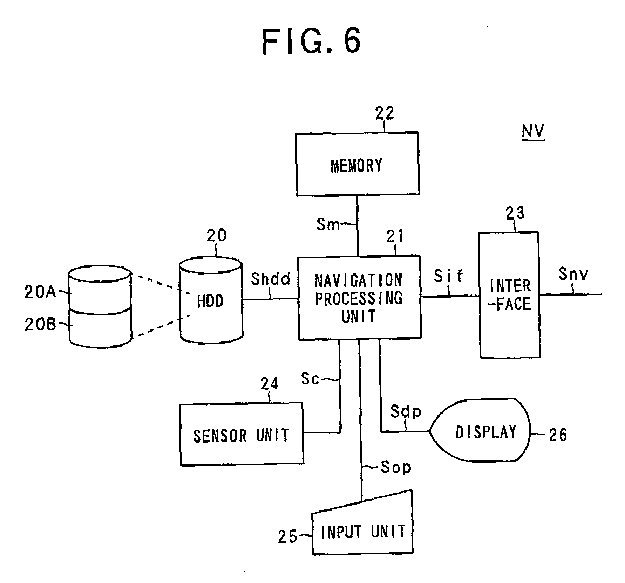

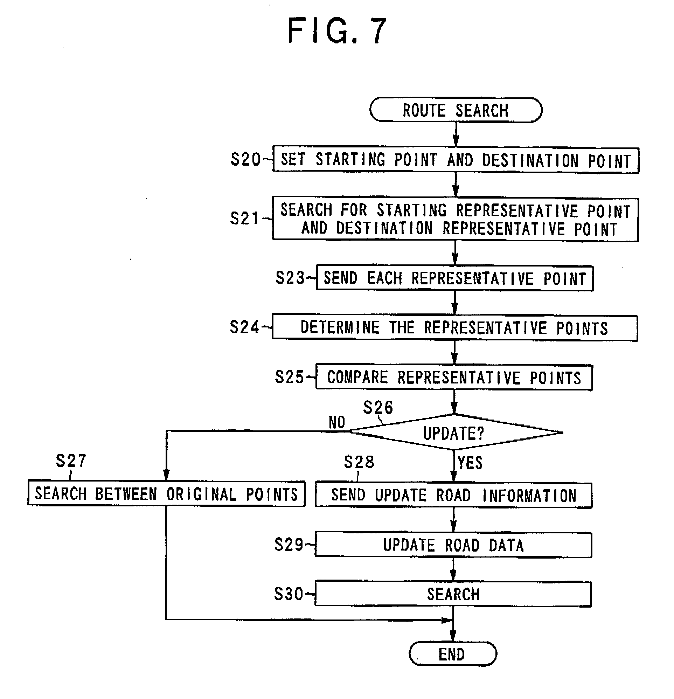

First, a first embodiment of the invention will be explained using FIG. 1 to FIG. 7. FIG. 1 is a block diagram showing the construction of a route search system of a first embodiment of the present invention. FIGS. 2A and 2B are block diagrams showing the detailed construction of each of the apparatuses of the route search system. FIG. 3 is a drawing showing an example of the configuration of road data of a first embodiment of the invention. FIG. 4 is a drawing showing an example of the state of representative points of a first embodiment of the invention. FIG. 5 is a flowchart showing the process performed by the server apparatus for updating map data in a first embodiment of the invention. FIG. 6 is a block diagram showing the construction of a car navigation system of a first embodiment of the invention. FIG. 7 is a flowchart showing the route search process of a first embodiment of the invention.

As shown in FIG. 1, the route search system of this first embodiment comprises a server apparatus SV, network NT such as the Internet, a plurality of car navigation systems NV, and a map data update apparatus PC.

Here, when updating the map data stored on the server apparatus SV to the most recent state, the map data update apparatus PC creates map update data Supdate for that update and outputs it to the server apparatus SV.

Also, the server apparatus SV uses that map update data Supdate to update the map data to the most recent state, and receives separate map data from each of the car navigation systems NV, then executes the route search process of this first embodiment, which will be explained later.

The various data that is output from the server apparatus SV is transmitted over the network NT as a server signal Ssv. Also, that data is output over the network NT to each of the car navigation systems NV as a car navigation signal Snv.

On the other hand, the various data that is output from the car navigation system NV is transmitted to the network NT as a car navigation signal Snv. Also, that data is output via the network NT to the server apparatus SV as a server signal Ssv.

Next, the detailed construction and operation of the server apparatus SV will be explained using FIG. 2A, FIG. 3 and FIG. 4.

As shown in FIG. 2A, the server apparatus SV comprises: a database 1 that comprises a hard disc or the like and that functions as storage device; a CPU 2 that functions as extraction device and judgment device; memory 3, an input unit 5 that includes a keyboard, mouse or the like; a display 6 that comprises a liquid-crystal display or the like; and an interface 4 that functions as server transmission device that connects a network NT or map data update apparatus PC with the CPU 2.

Here, map data that includes road data 1A for the route search of this first embodiment, representative point information 1B that indicates the contents of each of the representative points (described later) and inter-representative point route information 1C (described later) is periodically updated using map update data Supdate and stored in the database 1.

On the other hand, the interface 4 executes a predetermined input/output interface process on the map update data Supdate or server signal Ssv. Also, the interface 4 outputs data that is to be input to the server apparatus SV as map update data Supdate or a server signal Ssv to the CPU 2 as an interface signal Sif, and when the data that is to be output to each of the car navigation systems NV as the server signal Ssv is output from the CPU 2 as the interface signal Sif, converts that signal to a server signal Ssv and outputs it to the network NT.

Moreover, the CPU 2 uses the data for updating the map data that is transmitted as map update data Supdate when updating the map data in the database 1 to execute the update process of that map data, and uses that updated map data to execute the route search process of this first embodiment.

Here, an instruction necessary for causing the CPU 2 to operate during update of the map data is executed by an operator using the input unit 5, and an operation signal Sop that corresponds to that executed instruction operation is transmitted to the CPU 2. By doing this, the CPU 2 executes the processing for the update according to the contents of that operation signal Sop.

Also, the operating state of the server apparatus SV itself is output to the display 6 as a display signal Sdp that is output from the CPU 2, and is displayed on the display 6 according to a predetermined display format.

Moreover, various data necessary for operation of the CPU 2 is output to the memory 3 as a memory signal Sm, and is volatility or non-volatility stored in that memory 3, and when necessary is read as a memory signal Sm again.

Next, FIG. 3 and FIG. 4 will be used to explain a concrete example of road data 1A, representative point data 1B and inter-representative point route information 1C of the first embodiment that are stored in the database 1.

First, road data 1A for the route search process of this first embodiment comprises a combination of node information that indicates nodes that indicate points on roads (includes latitude, longitude and elevation information indicating the position of a node), and link information that indicates links that connect nodes (includes road ID information for identifying roads corresponding to the links, and information indicating the actual (current) length of roads that correspond to the links).

Also, as shown in FIG. 3 for example, the road data 1A is stored in the database 1 as mesh units M1, M2, M3, ... Mn obtained by diving a geographical range where the road lies according to mesh numbers.

Here, in regards to the method of setting the mesh M, taking into consideration convenience when executing the route search process, the mesh M is set arbitrarily by the creator of the map data, however, it is also possible to set the mesh M having different sizes for each scale of the map corresponding to the road data 1A, or mesh M having different sizes can be set based density of roads or amount of traffic within a map having the same scale.

In the first embodiment described below, a square mesh M will be explained as the mesh M, however, the shape of the mesh M is not limited to being a square, and could be set to be any arbitrary polygon shape, and it is also possible to further divide the mesh M based on boundaries of governmental divisions such as prefectures or the like.

Next, in the first embodiment, for each mesh, representative points that represent points on a road that lies within an area that corresponds to the mesh are set. In other words, using an example of Tokyo that includes the adjacent prefectures as shown in FIG. 4, representative points X_{L}, X_{L+1}, X_{L+2}, X_{L+3}, ... are respectively set for each mesh M_{L}, M_{L+1}, M_{L+2}, M_{L+3}, ... so that they have a one-on-one relationship.

Here, as the method for setting the representative point X within one mesh M, taking into consideration convenience when executing the route search process, the representative points are basically set arbitrarily by the creator of the map data; for example, an intersection within the mesh M that is represented by the representative point X where the amount of traffic is the greatest can be set as the representative point, or a point on a road that is the closest to the center of the mesh M that is represented by the representative point X can be set as the representative point X. Furthermore, an entrance to a freeway inside the mesh M that is represented by the representative point X can be set as the representative point X.

Also, representative point ID information for identifying each of the representative points X, version information or the map data update of each representative point X, and latitude, longitude and elevation information indicating the position of each representative point X is stored in the database 1 as representative point information 1B.

Finally, the inter-representative point route information 1C for the route search process of this first embodiment is route information in which route information that indicates all routes with one representative point X taken to be the starting point and all other representative points taken to be each of the respective destination points, is comprehensively collected for when each representative point is taken to be a starting point. In other words, it is route information that is found for all combinations of two representative points X, for routes that are used when traveling between two representative points X for each of the representative points on a map of all scales.

Next, the detailed construction and operation of the map data update apparatus PC will be explained using FIG. 2B.

As shown in FIG. 2B, the map data update apparatus PC comprises: a hard disc drive (HDD) 10 that includes a hard disc; a CPU 11 that functions as a server road information update device, representative point information update device and inter-representative point route information update device; memory 12; an input unit 14 that includes a keyboard or mouse; a display 15 that comprises a liquid-crystal display; and an interface 13 that connects the server apparatus SV with the CPU 11.

Here, the most recent map data that is received via the interface 13 from the outside is stored in the HDD 10.

On the other hand, the interface 13 executes a predetermined input/ output interface process on the map update data Supdate. Also, when data that is to be output to the server apparatus SV as map update data Supdate is output from the CPU 11 as an interface signal Sif, the interface 13 converts that interface signal Sif to map update data Supdate and outputs it to the server apparatus SV.

Also, the CPU 11 uses the most recent map data in the HDD 10 to generate data required for the update process for the map data in the server apparatus SV.

When doing this, an instruction necessary for causing the CPU 11 to operate when generating data is executed by an operator using the input unit 14, and an instruction is sent to the CPU 11 as an operation signal Sop corresponding to that executed instruction. After receiving that instruction, the CPU 11 executes a process for generating the aforementioned data according to the contents of the operation signal Sop.

Moreover, the operating state of the map data update apparatus PC itself is output to the display 15 as a display signal Sdp that is output from the CPU 11, and is displayed on the display 15 in a preset display format.

Furthermore, various data necessary for the operation of the CPU 11 is output to the memory 12 as a memory signal Sm, and is volatility or non-volatility stored in that memory 12, and when necessary is read as a memory signal Sm again.

Next, the process that is executed by the map data update apparatus PC for updating map data (in the server apparatus SV) that includes as preprocess the process of generating new mesh M and corresponding representative points X will be explained in detail using FIG. 5.

When new map data is acquired during the process for updating the map data in the server apparatus SV, the map data update apparatus PC performs as pre-processing a process of setting new mesh M and new representative points X that correspond to that new map data (a process of setting a new version of the mesh M and representative points X).

In other words, as shown in FIG. 5, in the process for updating map data that includes that pre-processing, the map data update apparatus PC acquires the most recent map data from the outside (step S1), sets the number of divisions Mn of the mesh M for the acquired map data based on for example, the scale of the map, density of roads, or amount of traffic corresponding to that map data (step S2), and divides the new map data by that set number of divisions to generate mesh M (step S3).

Next, as was described above, the map data update apparatus PC sets a representative point X, which is an intersection point in each mesh M where the amount of traffic is the greatest, or is a point on a road that is closet to the center of the mesh M, or is an entrance to a freeway that is in the center of the mesh, for each of the generated mesh M, and calculates the coordinates (latitude and longitude information, etc.) of each of the representative points as representative point information 1B (step S4). Here, version information that corresponds to the new representative points X is included in the new representative point information 1B.

Furthermore, in order to generate the inter-representative point route information 1C for the new map data (representative points X), the map data update apparatus PC initializes the parameter 'i' that indicates the mesh number for the mesh M that includes the representative point X that will be the starting point, and the parameter 'j' that indicates the mesh number of the mesh M that includes the representative point X that will be the destination point (step S5).

Also, the map data update apparatus PC takes the value of parameter 'i' at that time to be the mesh number, takes the representative point X in the mesh M to be the starting representative point S (step S6), and takes the value of the parameter 'j' at that time to be the mesh number, and takes the representative point X inside the mesh M to be the destination representative point G (step S7), then searches for a route from that starting representative point S to the destination representative point G using the new map data (road data) (step S8). When doing this, it is possible to search for one representative route as the route, or to search for a plurality of routes under different conditions.

Next, the map data update apparatus PC calculates the travel cost R using the route obtained as a result of that search, and stores it together with road ID information that identifies the roads of that route using coordinates MTX(i,j) of a matrix MTX with the value of the parameter 'i' at that time as the value on the x axis, and the value of the parameter 'j' at that time as the value on the y axis (the matrix MTX itself is stored in the HDD 10).

The travel cost R will be explained in more detail later in the explanation of a second embodiment of the invention. Also, in the route search process of this first embodiment, that travel cost R itself is not used.

The map data update apparatus PC updates the value of the parameter 'j' by only '1' (step S10), and determines whether or not the value of parameter 'j' after that incrementation is the maximum value Mn for the number of the mesh M, or in other words, determines whether or not route searches have been completed for all representative points X, other than the representative point X that is the starting representative point S at that time, as destination representative points G (step S11).

Also, when the value of the parameter 'j' is not yet the maximum value Mn for the number of mesh M (step S11: NO), then there is another representative point X (destination representative point G) for which a route has not yet been searched for the representative point X that is the starting representative point S at that time, so the map data update apparatus PC returns to step S7 and executes the subsequent process for the destination representative point G for which a route has not been searched. On the other hand, when the value of the parameter 'j' is the maximum value Mn for the number of the mesh M (step S11: YES), the map data update apparatus PC increments the parameter 'i' by only '1' (step S12), and then determines whether or not the value of the parameter '1' after that incrementation is the maximum value Mn for the number of the mesh M, or in other words determines whether or not route searches have been completed for all representative points X as starting representative points S (step S13).

When the value of the parameter 'i' is not yet the maximum value Mn for the number of the mesh M (step S13: NO), then there is still another representative point X that is to become a new starting representative point S, so the map data update apparatus PC returns to step S6 and executes the subsequent process for that new starting representative point. On the other hand, when the parameter 'i' has become the maximum value Mn for the number of the mesh M (step S13: YES), then the comprehensive route search for all representative points X is complete, so the map data update apparatus PC ends the generation of inter-representative point route information 1C (including the travel cost R) as pre processing.

After that, in addition to the new road data 1A, the new representative point information 1B and the new inter-representative point information 1C, the map data update apparatus PC outputs ID information or pointer information to the server apparatus SV that indicates the road data in the inter-representative point information 1C that will be the target of the update (step S14).

From this, the server apparatus SV uses the acquired map update data Supdate and updates the old road data 1A, representative point information 1B, and inter-representative point information 1C in the database 1.

Finally, the route search process of this first embodiment that uses the server apparatus SV that includes the updated database 1 and one of the car navigation systems NV is explained.

First, the construction of the car navigation system NV is explained.

As shown in FIG. 6, one car navigation system NV comprises: a hard disc drive (HDD) 20 that includes a hard disc; a navigation processing unit 21 that functions as a representative point setting device, update device and search device; a memory 22; an input unit 25 that includes operation buttons, a remote controller or the like; a display 26 that comprises a liquid-crystal display or the like; an interface 23 that connects the server apparatus SV with the navigation processing unit 21 and functions as a terminal apparatus transmission device; and a sensor unit 24 that includes a GPS (Global Positioning System) sensor that receives a navigation signal from a navigation satellite and detects the current position, and a distance sensor and acceleration sensor that autonomously detect the current position.

Here, road data 20A (divided into mesh M identical to that of the road data 1A) for the road search to be updated using the updated road data that is sent from the server apparatus SV (to be described later) is stored in the HDD 10 together with representative point information 20B.

As in the case of the road data 1A, the road data 20A comprises a combination of node information that indicates nodes that indicate points on the roads, and link information that indicates links that connect between nodes, and is stored in the HDD 10 in units of mesh M as in the case of road data 1A.

Also, as in the case of the representative point information 1B, the representative point information 20B includes representative point ID information for identifying corresponding representative points X, version information about the map data update of the representative points X, and latitude, longitude and elevation information indicating the position of the representative points X.

The road data 20A and representative point information 20B in the car navigation system NV, is different than the nationwide version of road data 1A and representative point information 1B that is stored in the database 1 of the server apparatus SV, in that only road data 20A and representative point information 20B that is provided for the route search process that is actually performed by the car navigation system NV is stored.

On the other hand, the interface 23 executes a pre determined input/output interface process on the car navigation signal Snv. Also, when update road data or the like is received from the server apparatus SV as a car navigation signal Snv, the interface 23 converts that signal to an interface signal Sif and outputs it to the CPU 21, and when data that is to be sent to the server apparatus SV is received from the CPU 21 as an interface signal Sif, converts that signal to a car navigation signal Snv and outputs it to the server apparatus SV.

On the other hand, the sensor unit 24 uses navigation signals or autonomously detects the current position, speed, and direction of travel, then generates a sensor signal Sc that indicates the detected contents and outputs it to the navigation processing unit 21.

Also, the navigation processing unit 21 uses the road data and the like that is stored in the HDD 20 to execute guidance processing that includes the route search processing of this first embodiment.

An instruction for causing the navigation processing unit 21 to operate during guidance processing is executed by an operator using the input unit 25, and that instruction is sent to the navigation processing unit 21 as an operation signal Sop that corresponds to the executed instruction operation. By doing this, the navigation processing unit 21 executes guidance processing according to the contents of the operation signal Sop.

Moreover, the operating state of the car navigation system NV is output to the display 26 as a display signal Sdp that is output from the navigation processing unit 21, and is displayed on the display 26 in a predetermined display format.

Furthermore, various data necessary for the operation of the navigation processing unit 21 are output to the memory 22 as a memory signal Sm, and are volatilly or non-volatilly stored in the memory 22, and when necessary are read as a memory signal Sm again.

Next, the route search process of this first embodiment that is executed by linking together the car navigation system NV and server apparatus SV that are constructed as described above, is explained using FIG. 7.

As shown in FIG. 7, in the route search process, first, after setting a starting point and a destination point for travel (step S20), the car navigation system NV searches the representative point information 20B for a starting representative point that represents the mesh M in which the set starting point is included, and for a destination representative point that represents the mesh M in which the set destination point is included (step S21).

Next, the car navigation system NV sends representative point information 20B that corresponds to the searched starting representative point and destination representative point to the server apparatus SV via the network NT (step S23).

Next, based on the received representative point information 20B that corresponds to the starting representative point and destination representative point, the server apparatus SV determines representative point information 1B that is stored in the server apparatus SV that corresponds the starting representative point and destination representative point included in that representative point information 20B (step S24).

Also, the server apparatus SV compares the version of each of the representative points X (more specifically, the starting representative point and destination representative point) that are included in the representative point information 20B that was received from the car navigation system NV in step S23 with the version of the representative points X that were determined by the server apparatus SV in step S24 (steps S25, S26), and when the representative points X (points corresponding to the starting representative point and destination representative point) that were determined by the server apparatus SV have been newly updated (step S26: YES), the server apparatus SV extracts route information (road data 1A included in that route that includes road ID information) that corresponds to the route between the determined representative points X from the database 1, and sends that route information to the car navigation system NV (step S28).

By doing this, the car navigation system NV to which that new route information was sent uses the route data 1A that is included in the received route information, and together with updating the road data 20A in the HDD 20 (step S29), uses that updated data 20A to search for a route from the original (step S20) starting point to the destination point (step S30), and then uses the result of that search to execute the guidance process.

On the other hand, in the judgment of step S26, when the server apparatus SV determines that the version of the representative points X that are included in the representative point information 20B that is received from the car navigation system NV is the same as that of the representative points X that were determined by the server apparatus SV (step S26: NO), the car navigation system NV does not update the road data of the searched route, but uses the road data 20A that is stored in the car navigation system NV at that time to search the route from the original (step S20) starting point to the destination point (step S27), and then executes the guidance process.

As was explained above, with the operation of the route search system S of this first embodiment, inter-representative point route information 1C for between all representative points X is comprehensively stored in the server apparatus SV, so when determining a route required by the car navigation system NV, the load on the server apparatus SV while determining routes between representative points is greatly reduced.

Also, the car navigation system NV compares the version of both the set starting representative point and destination representative point with the version of the corresponding representative points in the server apparatus SV, and determines whether or not to update the road data 20A, and since road data 20A that is not related to the necessary route of travel of the car navigation system NV is not updated, the minimum necessary amount of road data 20A to be updated for travel of the car navigation system NV is accurately set and road data 20 is quickly updated.

Therefore, it is possible to accurately determine the update range of road data 20A necessary for the route search by the car navigation system NV, and to efficiently execute the update process.

Also, when at least one of the representative points X that represent the mesh M that includes the route between the starting representative point and destination representative point is a point that has been updated for at least one of the representative points X that represent the mesh M in which the route that was searched by the car navigation system NV, the car navigation system NV determines that the road data 20A should be updated, so only when there is an updated representative point X is the minimum necessary amount of road data 20A updated efficiently with the most resent update data.

Moreover, the mesh M that is represented by the representative points X is mesh M that is divided beforehand based on at least one of the map scale, density of roads and amount of traffic corresponding to the road data 1A in the server apparatus SV, so when performing the route guidance process, the mesh M is divided based on the element that actually is a problem, so the route search is performed more accurately.

Furthermore, when a representative point is an intersection in the corresponding mesh M where the amount of traffic is the greatest, the representative point is set based on the amount of traffic that is the actual problem when performing the route guidance process, so the route search is performed more accurately.

Also, when a representative point X is a point on a road that is the closest to the center of the corresponding mesh M, the representative point X is set as the center of the mesh M that is the actual problem when performing the route guidance process, so the route search is performed more accurately.

Moreover, when a representative point X is an entrance to a freeway inside the corresponding mesh M, the representative point is set based on the freeway that will be the actual problem when performing the route guidance process when traveling a long distance.

Also, with the map data update apparatus PC of this first embodiment, the representative point information 1B and inter-representative point route are updated in accordance to the update of the road data 1A, so the latest information is always stored in the server apparatus SV and provided for a route search.

### (II) Second Embodiment

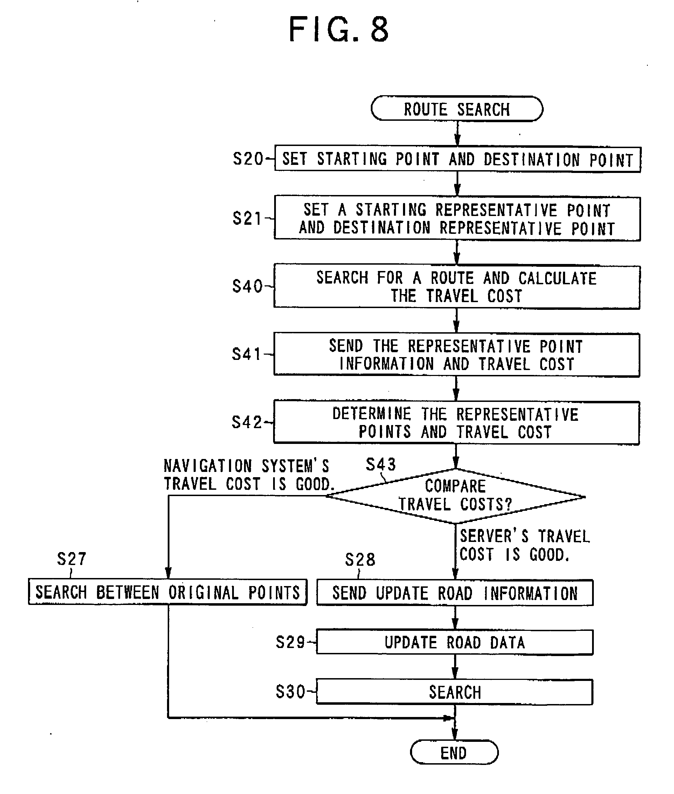

Next, a second embodiment of the invention is explained using FIG. 8. FIG. 8 is a flowchart showing the route search process of this second embodiment.

The construction of the route search system that executes the route search process of this second embodiment is basically the same as the construction of the route search system S of the first embodiment, so the same reference numbers will be used for identical parts in this second embodiment, and a detailed explanation of those parts will be omitted. Furthermore, in the flowchart shown in FIG. 8, the same step numbers are given to steps that perform the same process as in the route search process of the first embodiment described above (FIG. 7), and a detailed explanation of those steps is omitted.

In the first embodiment described above, the case of updating the road data 20A in the car navigation system NV only when the starting representative point and destination point on the route are updated in the server apparatus SV was explained, however, in the second embodiment that will be explained below, whether or not to update the road data 20A will be determined by taking into consideration the travel cost R (see step S9 of FIG. 5) when traveling over a searched route instead of taking into consideration the version of the representative points X.

Here, the travel cost R device the load that occurs during travel, or more specifically, is the required travel time for that travel, the actual travel distance for that travel, or the required fee or the like for that travel.

The inter-representative point information 1C in the server apparatus SV of this second embodiment is stored as the travel cost R between each representative point (in other words, the travel time, travel distance or required fee between the representative points).

As shown in FIG. 8, in the route search process of the second embodiment, first, the car navigation system NV performs the same process as steps S20 and S21 shown in FIG. 7.

Next, the car navigation system NV searches for a route from the searched starting representative point to the searched destination representative point, and calculates the required travel cost R when traveling over that searched route (step S40).

Also, the car navigation system NV sends representative point information 20 that indicates the starting representative point and destination point in the searched route, and information indicating the calculated travel cost to the server apparatus SV via the network NT (step S41).

Next, based on the received representative point information 20B, the server apparatus SV determines the representative point information 1b corresponding to the representative points that are stored in the server apparatus SV that correspond to the starting representative point and destination representative point included in that representative point information 20B, and extracts the travel cost R between the determined starting representative point and destination representative point from the inter-representative point route information 1C of this second embodiment (step S42).

In regards to the processing of step S42, when the inter-representative point route information 1C of this second embodiment is updated in the server apparatus SV by the map data update apparatus PC, the travel cost R that corresponds to that updated inter-representative point route information 1C is also updated.

Furthermore, when there is important road data 20A to be updated regardless of the travel cost R, the travel cost R that is used in the processing of step S42 can be updated when the inter-representative point route information 1C is updated so that it intentionally becomes a favorable travel cost R.

Also, the server apparatus SV compares the travel cost R that was sent from the car navigation system NV (step S41) with the travel cost R that was determined by the server apparatus SV (step S42) (step S43), and when the travel cost R that was determined by the server apparatus SV is better than the travel cost R that was sent from the car navigation system NV (the travel cost R is low) (step S43: server's travel cost R is good), the server apparatus SV extracts route information that corresponds to the route between the starting representative point and destination representative point that was determined in the process of step S42 (road data 1A that is included in that route and that includes road ID information) from the database 1 and sends it to the car navigation system NV (step S28).

The car navigation system NV then performs the same process as that of steps S29 and S30 shown in FIG. 7, and using the new search result, executes the guidance process.

On the other hand, in the judgment of step S43, when the travel cost R that is sent from the car navigation system NV is better than the travel cost R that is determined by the server apparatus SV (step S43: the navigation system's travel cost R is good), the car navigation system NV uses the road data 20A that is stored in the car navigation system NV at that time to search for the route from the original (step S20) starting point to the destination point (step S27), and then executes the guidance process.

As was explained above, with the operation of the route search system of this second embodiment, as in the case of the operation of the route search system S of the first embodiment, inter-representative point route information 1C for all representative points is comprehensively stored beforehand in the server apparatus SV, so when determining a route necessary for the car navigation system NV, the load on the server apparatus SV when determining routes between representative points is greatly reduced.

Also, whether or not to update the road data 20A is determined by comparing the travel cost R between the starting representative point and destination representative point set by the car navigation system NV with the travel cost R between corresponding representative points X found by the server apparatus SV, so road data 20A that is not related to the route required for travel of the car navigation system NV is not updated, so the minimum necessary amount of road data 20A to be updated for travel of the car navigation system NV is accurately set and road data 20 is quickly updated.

Therefore, it is possible to accurately determine the update range of road data 20A necessary for the route search by the car navigation system NV, and to efficiently execute the update process.

Moreover, the mesh M that is represented by the representative points X is mesh M that is divided beforehand based on at least one of the map scale, density of roads and amount of traffic corresponding to the road data 1A in the server apparatus SV, so when performing the route guidance process, the mesh M is divided based on the element that actually is a problem, so the route search is performed more accurately.

Furthermore, when a representative point is an intersection in the corresponding mesh M where the amount of traffic is the greatest, the representative point is set based on the amount of traffic that is the actual problem when performing the route guidance process, so the route search is performed more accurately.

Also, when a representative point X is a point on a road that is the closest to the center of the corresponding mesh M, the representative point X is set as the center of the mesh M that is the actual problem when performing the route guidance process, so the route search is performed more accurately.

Moreover, when a representative point X is an entrance to a freeway inside the corresponding mesh M, the representative point is set based on the freeway that will be the actual problem when performing the route guidance process when traveling a long distance.

In addition, when the travel properties when traveling over the route found by the server apparatus SV is more advantageous than the travel properties when the car navigation system NV travels over the route found beforehand by the car navigation system NV, it is determined that the road data 20A should be updated, so the road data 20A is efficiently updated only when it is necessary for the car navigation system NV that is going to travel.

Moreover, when the travel time is used as the travel cost R, and the travel time when the car navigation system NV travels a route by the server apparatus SV is shorter than the travel time when traveling the route found before by the car navigation system NV, it is determined that the road data 20A should be updated, so based on this travel time, the road data 20A is efficiently updated only when it is necessary for the car navigation system NV that is going to travel.

Furthermore, when the travel distance is used as the travel cost R, and the travel distance when the car navigation system NV travels a route by the server apparatus SV is shorter than the travel distance when traveling the route found before by the car navigation system NV, it is determined that the road data 20A should be updated, so based on this travel distance, the road data 20A is efficiently updated only when it is necessary for the car navigation system NV that is going to travel.

Also, when the travel fee is used as the travel cost R, and the travel fee when the car navigation system NV travels a route by the server apparatus SV is less than the travel fee when traveling the route found before by the car navigation system NV, it is determined that the road data 20A should be updated, so based on this travel fee, the road data 20A is efficiently updated only when it is necessary for the car navigation system NV that is going to travel.

In both of the embodiments described above, cases were explained in which a route search process was executed by the car navigation system NV, however, besides this, the present invention could also be applied to the case in which a route search process was executed by a mobile information terminal apparatus or a mobile telephone.

Furthermore, programs corresponding to the flowcharts shown in FIG. 5, FIG. 7 or FIG. 8 are recorded on an information recording medium such as a flexible disc or hard disc, or are acquired over the Internet or the like and recorded, and by reading the programs and executing them by a general-purpose computer, it is possible for that computer to function as the CPU 11 of the map data update apparatus PC of the embodiments (for a program corresponding to the flowchart shown in FIG. 5), or as the server apparatus SV or navigation processing unit 21 of the car navigation system NV (for programs corresponding to the flowcharts shown in FIG. 7 or FIG. 8).

The invention is not limited to the embodiments or the example as described above, and suitable changes can be made within the range consistent with the content or idea of the invention, which can be read from the claims and the entire specifications, and a display apparatus or a method accompanying such changes is also included in the technical idea of the invention.

## Claims

1. A route search system **characterized, in** the route search system, which searches for a route of travel for a mobile terminal and that is included in a navigation system that comprises a server apparatus that updates and stores the most recent server road information, and a mobile terminal that connects to the server apparatus, stores terminal road information and performs guidance processing; wherein
the server apparatus comprises a storage device for storing: representative point information that indicates representative points, which are representative points that represent areas where a road lies and that is divided beforehand and that are set beforehand for each area, and that corresponds to the most recent the server road information; and inter-representative point route information that indicates the roads that should be used when traveling between all the representative points together with the most recent server road information;
the terminal apparatus comprises:
a representative point setting device for setting a starting representative point that corresponds to the starting point of the route over which the mobile terminal travels, and a destination representative point that corresponds to the destination point of that route;
a terminal apparatus transmission device for transmitting route information to the server apparatus that corresponds to a route between representative points from the set starting representative point to the destination representative point;
an update device for using received updated road information to update the saved terminal road information when updated road information is sent from the server apparatus to be used in updating the terminal road apparatus; and
a search device for using the updated terminal road information to search for a route from the starting point to the destination point; and
the server apparatus further comprises:
an extraction device for extracting the inter-representative point route information from the storage device that indicates the roads to be used when traveling from the representative starting point that corresponds to the sent route information to the representative destination point that corresponds to the sent route information;
a judgment device for comparing the extracted inter-representative point route information with the sent route information, determining whether or not to update the terminal road information; and
a server apparatus transmission device for transmitting the update information to the terminal apparatus that is to be used for update when it is determined that the terminal road information should be updated.

2. The route search system of claim 1 wherein
the judgment device compares the travel properties when the terminal apparatus travels over a route that corresponds to the extracted inter-representative point route information with the travel properties when the terminal apparatus travels over a route that corresponds to the sent route information, and when the travel properties when the terminal apparatus travels over a route that corresponds to the inter-representative point route information is more advantageous for the terminal apparatus than the travel properties when the terminal apparatus travels over a route that corresponds to the sent route information, determines that the terminal road information should be updated.

3. The route search system of claim 2 wherein
the judgment device determines that the terminal road information should be updated when the travel time required for the terminal to travel over a route that corresponds to the inter-representative point route information is shorter than the travel time required for the terminal apparatus to travel over a route that corresponds to the sent route information.

4. The route search system of claim 2 wherein
the judgment device determines that the terminal road information should be updated when the travel distance required for the terminal to travel over a route that corresponds to the inter-representative point route information is shorter than the travel distance required for the terminal apparatus to travel over a route that corresponds to the sent route information.

5. The route search system of claim 2 wherein
the judgment device determines that the terminal road information should be updated when the travel fee required for the terminal to travel over a route that corresponds to the inter-representative point route information is less than the travel fee required for the terminal apparatus to travel over a route that corresponds to the sent route information.

6. The route search system of claim 1 wherein
the judgment device determines that the terminal road information should be updated when at least one of the representative points that represent the areas which include a route corresponding to the extracted inter-representative point route information is an updated point of at least one of the representative points that represent the area which includes a route that corresponds to the sent route information.

7. The route search system of any one of the claims 1 to 6 wherein
the areas are areas that are divided beforehand based on at least one of map scale, density of roads and amount of traffic that corresponds to the server road information.

8. The route search system of any one of the claims 1 to 6 wherein
the representative point is an intersection in the area that is represented by that representative point where the amount of traffic is the greatest.

9. The route search system of any one of the claims 1 to 6 wherein
the representative point is a point on a road that is the closest to the center of the area that is represented by that representative point.

10. The route search system of any one of the claims 1 to 6 wherein
the representative point is an entrance to a freeway inside the area that is represented by that representative point.

11. A road data generation apparatus, **characterized in that** the road data generation apparatus, which generates the server road information, the representative point information and the inter-representative point route information that is stored in the server apparatus that is included in the route search system of any one of the claims 1 to 6, comprises:
a server road information update device for updating the server road information to the most recent information after each preset period;
a representative point information update device for updating the representative point information that corresponds to the updated server road information; and
an inter-representative point route information update device for updating the inter-representative point route information that corresponds to the updated server road information.

12. Route search data, **characterized in that** the Route search data, which is stored in the storage device in the server apparatus of any one of the claims 1 to 6, comprises:
the server road information that is used in the generation of the inter-representative point route information and configured so that the update road information can be extracted;
area information that indicates the areas that correspond to the most recent the server road information;
the representative point information that indicates the representative points that are set for each of the most recent areas; and
the inter-representative point route information that indicates the roads as inter-representative point routes that are comprehensively searched for based on the most recent representative point information.

13. A server apparatus, **characterized in that** the server apparatus, which is included in the route search system of any one of the claims 1 to 6, comprises:
the storage device;
the extraction device;
the judgment device; and
the server apparatus transmission device.

14. A terminal apparatus, **characterized in that** the terminal apparatus, which is included in the route search system of any one of the claims 1 to 6, comprising:
the representative point setting device;
the terminal apparatus transmission device;
the update device; and
the search device.

15. A program for a server apparatus, **characterized in that** the program, which makes a computer included in the server apparatus that is included the route search system of any one of the claims 1 to 6 and comprising the storage device to function as:
the extraction device;
the judgment device; and
the server apparatus transmission device.

16. A program for a terminal apparatus, **characterized in that** the program, which makes a computer that is included in the terminal apparatus that is included in the route search system of any one of the claims 1 to 6 to function as:
the representative point setting device;
the terminal apparatus transmission device;
the update device; and
the search device.

17. A route search method, **characterized in that** the route search method, which searches for a route of travel for a mobile terminal that is included in a navigation system that comprises a server apparatus that updates and stores the most recent server road information, and a terminal apparatus that connects to the server apparatus, stores terminal road information and performs guidance processing; wherein
the server apparatus comprises storage device for storing: representative point information that indicates representative points, which are representative points that represent areas where a road lies and that is divided beforehand and that are set beforehand for each area, and that corresponds to the most recent the server road information; and inter-representative point route information that indicates the roads that should be used when traveling between all the representative points together with the most recent server road information; and
comprises:
a representative point setting process in which the terminal apparatus sets a starting representative point that corresponds to the starting point of the route over which the mobile terminal travels, and a destination representative point that corresponds to the destination point of that route;
a first transmission process in which the terminal apparatus transmission transmits route information to the server apparatus that corresponds to a route between representative points from the set starting representative point to the destination representative point;
an extraction process in which the server apparatus extraction device extracts the inter-representative point route information from the storage device that indicates the roads to be used when traveling from the representative starting point that corresponds to the sent route information to the representative destination point that corresponds to the sent route information;
a judgment process in which the server apparatus compares the extracted inter-representative pint route information with the sent route information, determining whether or not to update the terminal road information;
a second transmission process in which the server apparatus transmits the update information to the terminal apparatus that is to be used for update when it is determined in the judgment process that the terminal road information should be updated;
an update process in which the terminal apparatus to which the updated road information is sent uses the sent updated road information to update saved terminal road information; and
a search process in which the terminal apparatus with the updated terminal road information uses that updated terminal road information to search for a route from the starting point to the destination point.
